# EUROPEAN PATENT SPECIFICATION

(11) **EP 2 230 128 B1**
(45) Date of publication and mention of the grant of the patent: **09.03.2016**
(21) Application number: 10156080.3
(22) Date of filing: 10.03.2010
(51) Int. Cl.: F21S 8/10, B60Q 1/14, F21V 14/08

(54) **Automotive headlamp apparatus for controlling light distribution pattern**
Fahrzeugscheinwerfervorrichtung zur Steuerung des Lichtverteilungsmusters
Dispositif de phares automobiles contrôlant un motif de distribution de lumière

(30) Priority: 12.03.2009 JP 2009060301; 10.12.2009 JP 2009280632
(43) Date of publication of application: 22.09.2010
(73) Proprietor: Koito Manufacturing Co., Ltd., Tokyo 108-8711 (JP)
(72) Inventor: Tatara, Naohisa, Shizuoka-shi Shizuoka 424-8764 (JP)
(74) Representative: Neobard, William John

(56) References cited:
- EP-A2- 2 098 775
- DE-A1- 1 630 466
- DE-A1-102006 031 819
- DE-A1-102006 043 281
- DE-B- 1 125 855
- US-A1- 2007 091 629

## Description

The present invention relates to a vehicular headlamp apparatus, and particularly to a vehicular headlamp apparatus used for automobiles and the like.

Generally, an automotive headlamp apparatus is capable of switching an illumination mode between a low beam and a high beam. The low beam is for illuminating an area close to, for example, a vehicle with a predefined illumination intensity. Distribution of the low beam is subject to provisions that provide for prevention of glare as experienced by drivers of vehicles-in-front including forerunning vehicles and oncoming vehicles. The low beam is primarily used on city streets. On the other hand, the high beam is for illuminating wide areas ahead and distant areas with a relatively high illumination intensity. The high beam is primarily used for high-speed driving on a road with relatively few oncoming vehicles and vehicles in front.

As compared with the low beam, the high beam excels in the visibility for a driver. However, the high beam has a disadvantage of causing the drivers of other vehicles to experience a glare. Thus, the low beam is mainly used in the night ride particularly in city areas, and the light source for producing a high beam is not used while the low beam is in use. At the same time, it is still constantly required that the visibility of road ahead of the driver be improved while the low beam is in use.

In this connection, the patent specification of German Patent Application Publication No. 102006043281 discloses a technology for changing light distribution patterns in response to a vehicle-in-front existent region. In this technology, a plurality of shutter segments having a plurality of focal lines are independently rotatable about a rotation axis extending horizontally, and a plurality of light distribution patterns having different cutoff lines are formed by combining the focal lines as the shutter segments are rotated respectively. Also, the patent specification of German Patent Application Publication No. 102007045150 discloses a technology in which the shade has a movable part and the high beam is directed to a one-sided region only in front of the vehicle by retreating the movable part from the cutoff line in low beam illumination. Thus a light distribution pattern with the high beam in one-sided regions, opposite for the left and right lamps, is formed, and at the same time the shaded region is changed by swiveling each of the lamps in response to the vehicle-in-front existent region.

EP-A-2098775, filed 5 March 2009 in the name of the present applicant and published in September 2009, discloses an automotive headlamp apparatus comprising: a first lamp unit capable of forming a first high beam distribution pattern which has an illuminated region and a non-illuminated region side by side horizontally in areas above cutoff lines of a low beam distribution pattern; a second lamp unit capable of forming a second high beam distribution pattern which has an illuminated region and a non-illuminated region side by side horizontally in areas above cutoff lines of a low beam distribution pattern, wherein a boundary between the illuminated region and the non-illuminated region is dislocated horizontally from a boundary between the illuminated region and the non-illuminated region in the first high beam distribution pattern; and a control unit for controlling the formation of the first high beam distribution pattern and the second high beam distribution pattern based on positional information on a vehicle-in-front obtained by a vehicle detecting unit. It does not disclose the features of the two high beam distribution patters claimed in the appended independent claim, and is relevant under Art 54(3) EPC only.

DE 1 125 855 B discloses a headlamp with a plurality of shade elements. Said headlamp is adapted to produce a light distribution having a shadowed area in the middle of an area above the cutoff line of the low beam region. The headlamp according to this document may be controlled in order to vary the width of the shadowed area.

Under the foregoing circumstances, the present inventor has come to a realization of the following problems. That is, the conventional technologies as cited above involve complex structure such as a plurality of shutter segments which are independently rotatable or the movable part of the shade. Also, they require complex control such as the independent control of the rotation of each shutter segment or the swiveling of the right and left lamps. Moreover, the complexity of their structure and control tends to push the manufacturing cost higher.

The present invention has been made based on such realizations of the inventor, and a purpose thereof is to provide a technology that can not only simplify the structure and control and reduce the manufacturing cost but also improve the visibility for the driver while avoiding glare to the drivers in the vehicles running in front.

The invention is recited in the appended independent claim. Some features of embodiments are in the dependent claims

Embodiments will now be described by way of example only, with reference to the accompanying drawings which are meant to be exemplary, not limiting and wherein like elements are numbered alike in several Figures in which:
FIG. 1 is a vertical cross-sectional view schematically showing a structure of a first embodiment of an automotive headlamp apparatus;
FIG. 2A is a schematic front view of a first shade;
FIG. 2B is a schematic front view of a low beam shade;
FIG. 3A is a schematic front view of a second shade;
FIG. 3B is a schematic front view of a low beam shade;
FIG. 4A is an illustration showing a first high beam distribution pattern formed by a first lamp unit;
FIG. 4B is an illustration showing an individual low beam distribution pattern formed by a first lamp unit;
FIG. 5A is an illustration showing a second high beam distribution pattern formed by a second lamp unit;
FIG. 5B is an illustration showing an individual low beam distribution pattern formed by a second lamp unit;
FIG. 6 is a control block diagram of an automotive headlamp apparatus according to a first embodiment of the present invention;
FIG. 7A shows a light distribution pattern when a vehicle-in-front is in a long-range area;
FIG. 7B shows a light distribution pattern when a vehicle-in-front is in a middle-range area;
FIG. 7C shows a light distribution pattern when a vehicle-in-front is in a close-range area;
FIG. 8 is a control flowchart for an automatic formation control of light distribution pattern;
FIG. 9 is a vertical cross-sectional view schematically showing a structure of a second embodiment of an automotive headlamp apparatus;
FIG. 10A is a schematic front view of a first shade in a third embodiment of an automotive headlamp apparatus;
FIG. 10B is an illustration showing a first high beam distribution pattern formed by a first lamp unit;
FIG. 11A is a schematic front view of a second shade in the third embodiment of the automotive headlamp apparatus;
FIG. 11B is an illustration showing a second high beam distribution pattern formed by a second lamp unit;
FIG. 12A shows a light distribution pattern when an oncoming vehicle is in a long-range area;
FIG. 12B shows a light distribution pattern when an oncoming vehicle is in a middle-range area;
FIG. 12C shows a light distribution pattern when an oncoming vehicle is in a close-range area; and
FIG. 13 is an illustration showing a light distribution pattern when a vehicle-in-front in a first modification is at a long distance.

### (First embodiment)

A first embodiment of an automotive headlamp apparatus 1 includes a left-hand headlamp unit and a right-hand headlamp unit, and is of a structure such that the left-hand headlamp unit is disposed on a left side of a front end portion of a vehicle and the right-hand headlamp unit is disposed on a right side thereof. The left-hand headlamp unit has a first lamp unit capable of forming a predetermined first high beam distribution pattern. The right-hand headlamp unit has a second lamp unit capable of forming a predetermined second high beam distribution pattern which differs from the first high beam distribution pattern. The left-hand headlamp unit and the right-hand headlamp unit are of identical structure except that the structure of a part of lamp units in them differ from each other and the internal structures thereof are bilaterally symmetrical to each other. In the following description, therefore, the left-hand headlamp unit will be explained as an example, and the description of the right-hand headlamp unit will be omitted as appropriate.

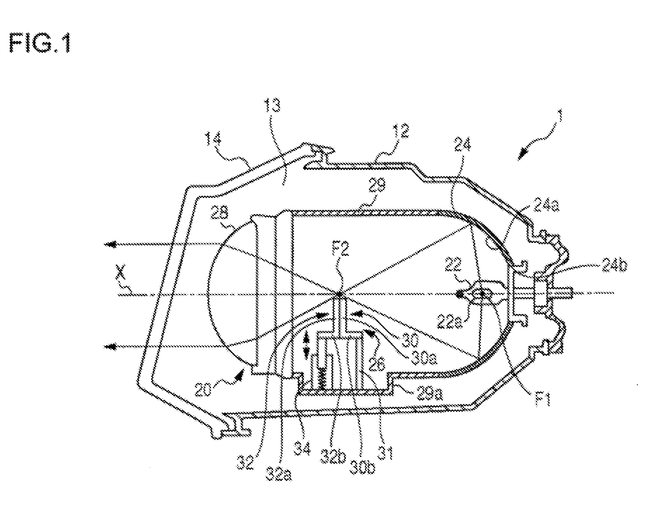

Referring to Figure 1, an automotive headlamp apparatus (i.e., left-hand headlamp unit) includes a lamp body 12, a translucent cover 14, and a first lamp unit 20. In the following description, the left side of FIG. 1 is treated as the front side of the lamp unit, whereas the right side of FIG. 1 is treated as the rear side of the lamp unit. Also, the right side as viewed toward the front side of the lamp unit is called the right side of the lamp unit, whereas the left side as viewed toward the front side thereof is called the left side of the lamp unit. FIG. 1 is a cross-sectional view of the automotive headlamp apparatus 1 cut along the vertical plane including an optical axis X of the first lamp unit 20, as viewed from the left side of the lamp unit.

The lamp body 12 is formed in a box-like shape having an opening in front. The translucent cover 14 is formed, in a bowl-like shape, of resin or glass having translucency. A rim of the translucent cover 14 is fit to the opening of the lamp body 12, so that the translucent cover 14 is fixed to the lamp body 12. A lamp chamber 13 is formed in a region covered by the lamp body 12 and the translucent cover 14. The first lamp unit 20 is housed within the lamp chamber 13 and is fit to the lamp body 12 by a mounting mechanism (not shown) having bolts and nuts therein, so that the first lamp unit 20 is fixed within the lamp chamber 13. A not-shown extension member having an opening in a region where the first lamp unit 20 is disposed is fixed to the lamp body 12 or the translucent cover 14. Thereby, a region between an opening in front of the lamp body 12 and the first lamp unit 20 is covered as seen from the front side.

The first lamp unit 20 includes a light source bulb 22, a reflector 24, a shade unit 26, a projection lens 28, and a holder 29. A halogen bulb having a filament is used as the light source bulb 22, and it has therein a light source 22a which is a discharge light emitting unit. Note that a discharge bulb (so-called high intensity discharge (HID) lamp) using an arc discharge, such as a metal halide bulb, or a light emitting device, such as a light emitting diode (LED), may be used for the light source bulb 22.

The reflector 24 is formed in the shape of a cup, and an insertion hole 24b through which the light source bulb 22 is inserted is formed on the bottom thereof. The light source bulb 22 is inserted into the insertion hole 24b and fixed to the reflector 24. The reflector 24 has a reflecting surface 24a on the inside thereof which is mirror finished. An opening of the reflector 24 is coupled to an opening of the holder 29 where the projection lens 28 is not mounted. As a result, the reflector 24 and the holder 29 are fixed with each other in such a manner that the light source 22a is positioned on the optical axis X.

At least part of the reflector 24 is of an elliptical sphere, and this elliptical sphere is set such that the cross-sectional shape including the optical axis X of the first lamp unit 20 is at least part of the elliptical shape. An elliptical sphere portion of the reflector 24 has a first focal point F1 in an approximately central part of the light source 22a and a second focal point F2 in the vicinity of a top edge of the shade unit 26.

The shade unit 26 is disposed between the light source 22a and the projection lens 28, and blocks part of light which has been emitted from the light source 22a, then reflected by the reflector 24 and directed toward the projection lens 28. The shade unit 26 includes a first shade 30, a shade supporting member 31, a low-beam shade 32, and an actuator 34 (drive part).

The first shade 30 is formed in an L-shape as viewed from the left side of the lamp. The first shade 30 includes a light shielding part 30a which shields the light directed from the light source 22a and a flange part 30b attached to the shade supporting member 31. The low-beam shade 32 is formed in an inverted L-shape as viewed from the left side of the lamp. The first low-beam shade 32 includes a light shielding part 32a which shields the light directed from the light source 22a and a flange part 32b attached to a top edge of the actuator 34.

The flange part 30b is attached to the top edge of the shade supporting member 31, whereas the lower end of the shade supporting member 31 is fixed to a supporting base 29a disposed at the bottom of the holder 29. The flange part 32b of the low-beam shade 32 is attached to the top edge of the actuator 34, so that the low-beam shade 32 can be moved in vertical directions in FIG. 1 by the operation of a solenoid, for instance. The lower part of the actuator 34 is fixed to the supporting base 29a. In other words, the actuator 34 can move the low-beam shade 32 in the advancing and retreating directions relative to the optical axis X (in a direction moving closer to or away from the optical axis).

The projection lens 28, which is a plano-convex aspheric lens having a convex front surface and a plane rear surface, is disposed on the optical axis X extending in the longitudinal directions of a vehicle and is coupled to an opening of the holder 29 where the reflector 24 is not mounted. The projection lens 28 projects a light source image formed on a rear focal plane toward a front area of the automotive headlamp apparatus 1 as a reverted image. A rear focal point of the projection lens 28 is so adjusted as to be approximately identical to the second focal point F2. The holder 29 is coupled to the lamp body 12 by the not-shown mounting mechanism and thereby the first lamp unit 20 is attached to the lamp body 12.

The light, which has emitted from the light source 22a of the light source bulb 22, is reflected by the reflecting surface 24a of the reflector 24. Then the light source image is formed on the rear focal plane of the projection lens 28. The light source image formed on the rear focal plane thereof enters the projection lens 28 and is irradiated toward the front area as a reverted image. The first lamp unit 20 projects the light, which has emitted from the light source 22a, onto the first shade 30 and the low-beam shade 32. This forms light distribution patterns having light-dark boundary lines suited to the head shape of each shade. In the present embodiment, a description will be given with reference to projection images which are formed on a virtual vertical screen set at a point in front of the lamps, for example, at a point 25 meters ahead of a vehicle. The configuration of the first lamp unit 20 is not limited to the above-described one and, for example, a reflection-type lamp unit which has no projection lens 28 may be used.

The second lamp unit in the right-hand headlamp unit differs from the first lamp unit 20 in that the second lamp unit has a second shade 50 having a shape different from that of the first shade 30.

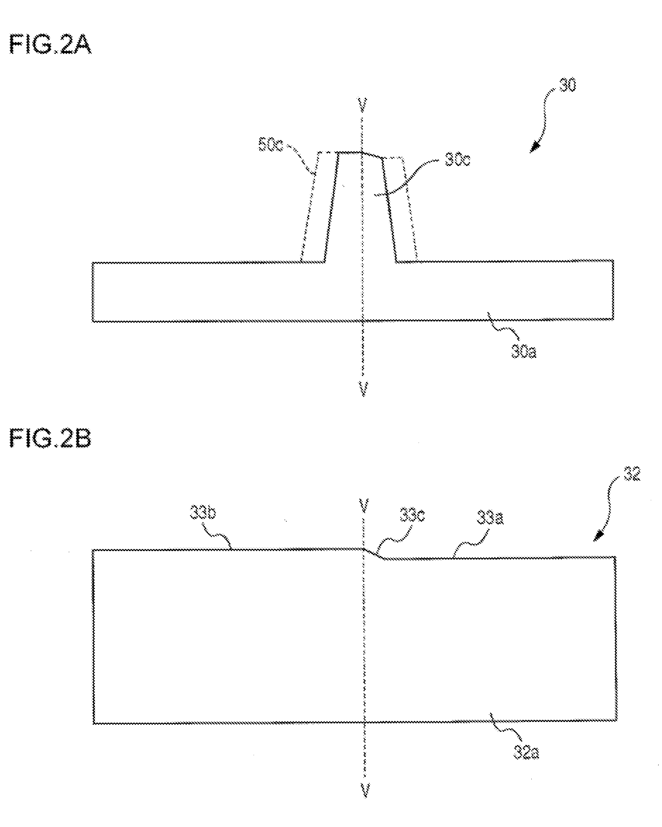

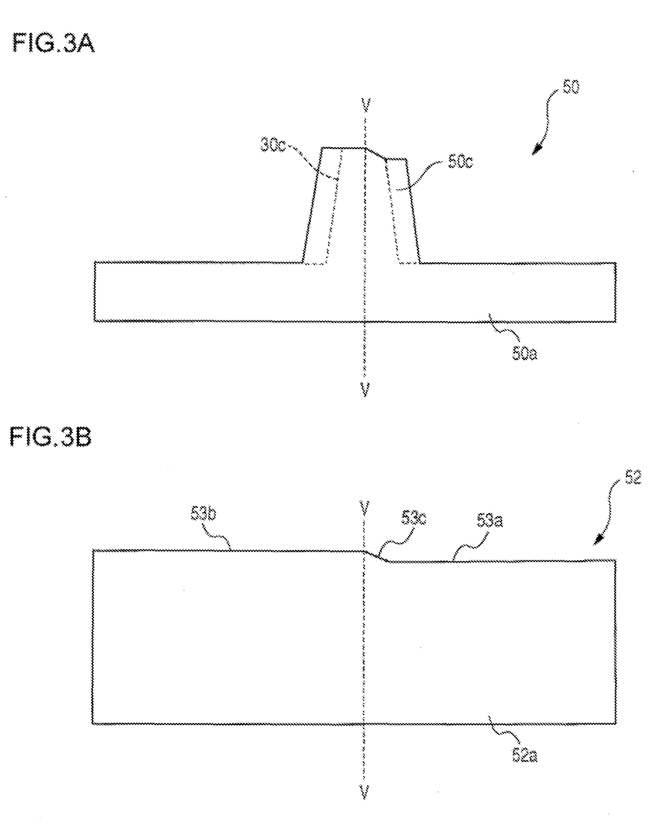

Next, a detailed description is given of a structure of the first shade 30 and the low beam shade 32 in the first lamp unit 20 and a structure of the second shade and the low beam shade in the second lamp unit. FIG. 2A is a schematic front view of the first shade, and FIG.2B is a schematic front view of the low beam shade. FIG. 3A is a schematic front view of the second shade, and FIG. 3B is a schematic front view of the low beam shade. Note that the flange parts are omitted in FIGS. 2A to 3B.

As shown in FIG. 2A, the light shielding part 30a of the first shade 30 extends in the vehicle width direction, and a protruding part 30c protruding vertically relative to the vehicle width direction is provided in an approximately middle part of the light shielding part 30a. The height of the protruding part 30c is such that the tip thereof approximately agrees with the tip of the light shielding part 32a in the state where the low beam shade 32 is in an advanced position which is advanced relative to the optical axis X (i.e., in the state as shown in FIG. 1). The width of the protruding part 30c is narrower than the width of a protruding part 50c of the second shade 50 described later (indicated by broken lines in FIG. 2A). The protruding part 30c has a side surface formed with increasingly smaller diameter toward a head portion. Note that the left and right side surfaces of the protruding part 30c may extend in parallel with each other, instead.

As shown in FIG. 2B, the light shielding part 32a of the low beam shade 32 includes, in its head portion, a ridge line 33a and a ridge line 33b extending horizontally, and a ridge line 33c extending obliquely between the ridge line 33a and the ridge line 33b. The ridge line 33a is stepped down from the ridge line 33b. The ridge line 33a is located on the right side of a vertical line V-V line passing through a vanishing point in a frontal direction of the automotive headlamp apparatus 1. The ridge line 33b is located on the left side of the V-V line and is located in a position higher than the position of the ridge line 33a. The ridge line 33c connects a V-V line side end of the ridge line 33a with a V-V line side end of the ridge line 33b. The low beam shade 32 moves in the advancing and retreating directions relative to the optical axis X by the actuator 34. That is, the low beam shade 32 can be positioned in an advanced position (advanced state) where the tip of the low beam shade 32 approximately agrees with the tip of the protruding part 30c and also can be positioned in a retreated position (retreated state) where the tip of the low beam shade 32 approximately agrees with the tip of a nonexistent region of the protruding part 30c.

The second lamp unit is formed in an L-shape as viewed from the left side of the lamp. The second shade 30 includes a light shielding part which shields the light directed from the light source and a flange part attached to a shade supporting member. The second lamp unit also includes a low-beam shade which is formed in an inverted L-shape as viewed from the left side of the lamp. This low-beam shade includes a light shielding part which shields the light directed from the light source and a flange part attached to a top edge of the actuator.

As shown in FIG. 3A, a light shielding part 50a of the second shade 50 extends in the vehicle width direction, and a protruding part 50c protruding vertically relative to the vehicle width direction is provided in an approximately middle part of the light shielding part 50a. The height of the protruding part 50c is such that the tip thereof approximately agrees with the tip of a light shielding part 52a in the state where a low beam shade 52 is in an advanced position which is advanced relative to the optical axis X. The width of the protruding part 50c is wider than the width of the protruding part 30c (indicated by broken lines in FIG. 3A). The protruding part 50c has a side surface formed with increasingly smaller diameter toward a head portion. Note that the left and right side surfaces of the protruding part 50c may extend parallel to each other, instead.

As shown in FIG. 3B, the light shielding part 52a of the low beam shade 52 includes, in its head portion, a ridge line 53a and a ridge line 53b extending horizontally, and a ridge line 53c extending obliquely between the ridge line 53a and the ridge line 53b. The ridge line 53a is stepped down from the ridge line 53b. The ridge line 53a is located on the right side of a vertical line V-V line passing through the optical axis X. The ridge line 53b is located on the left side of the V-V line and is located in a position higher than the position of the ridge line 53a. The ridge line 53c connects an V-V line side end of the ridge line 53a with a V-V line side end of the ridge line 53b. The low beam shade 52 moves in the advancing and retreating directions relative to the optical axis X by the actuator. That is, the low beam shade 52 can be positioned in an advanced position (advanced state) where the tip of the low beam shade 52 approximately agrees with the tip of the protruding part 50c and can also be positioned in a retreated position (retreated state) where the tip of the low beam shade 52 approximately agrees with the tip of a nonexistent region of the protruding part 50c.

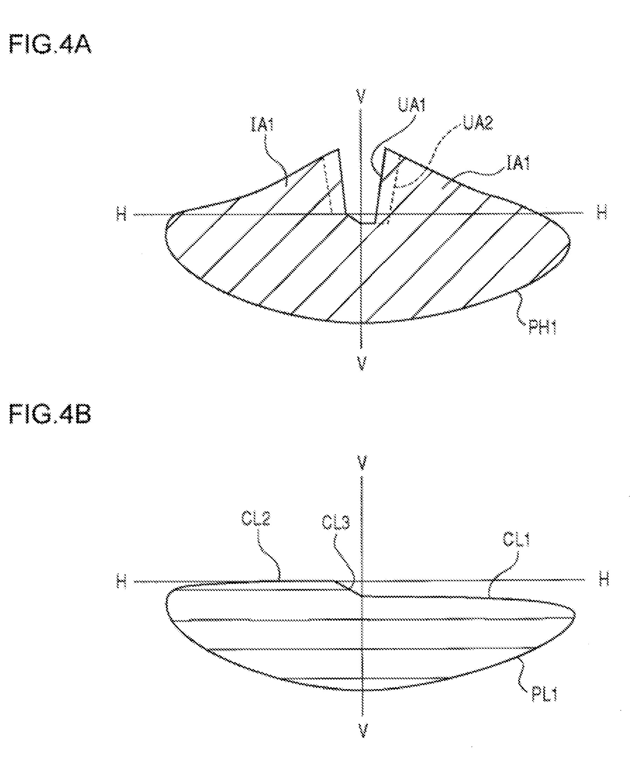

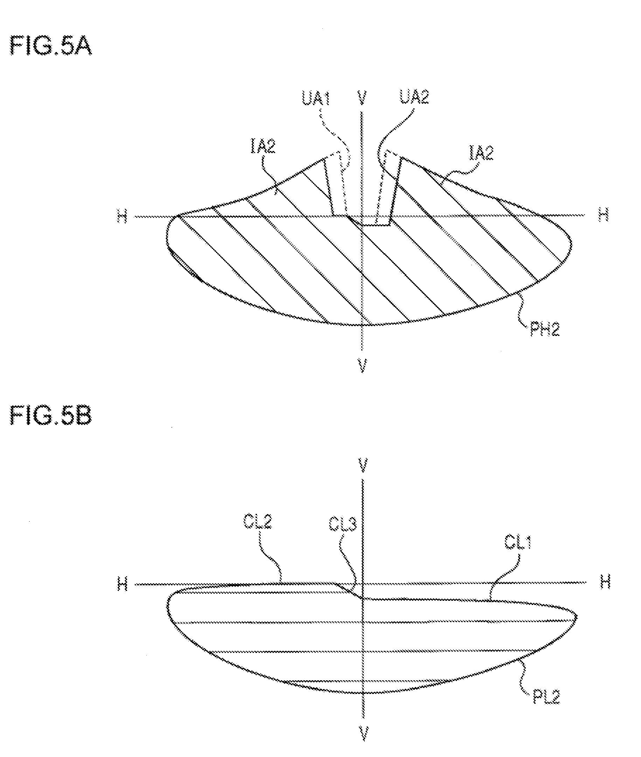

FIG. 4A is an illustration showing a first high beam distribution pattern formed by a first lamp unit, and FIG. 4B is an illustration showing an individual low beam distribution pattern formed by the first lamp unit. Also, FIG. 5A is an illustration showing a second high beam distribution pattern formed by a second lamp unit, and FIG. 5B is an illustration showing an individual low beam distribution pattern formed by the second lamp unit. Note that FIGS. 4A to 5B all show light distribution patterns formed on a virtual vertical screen set at a point in front of the lamps, for example, at a point 25 meters ahead of the automotive lamps.

A first high beam distribution pattern PH1 as shown in FIG. 4A is formed by irradiated light from the first lamp unit 20 when the low beam shade 32 is in the retreated state. The first high beam distribution pattern PH1 has an illuminated region IA1 and a non-illuminated region UA1 side by side horizontally in areas above the cutoff lines of the low beam distribution pattern to be described later. More specifically, the first high beam distribution pattern PH1 is a recessed light distribution pattern which has a non-illuminated region UA1 in a middle part of areas above the cutoff lines of the low beam distribution pattern and an illuminated region IA1 on each side of the non-illuminated region UA1. Note that this recessed light distribution pattern (PH1) is approximately grooved-shape in cross section as shown in FIG. 4A. The non-illuminated region UA1, which is a region projected as a reverted image of the part blocked by the protruding part 30c of the first shade 30, has a side surface becoming wider as it is further apart or higher from a horizontal line H-H. Note that when the protruding part 30c has left and right side surface geometries extending parallel to each other, the left and right side surfaces of the non-illuminated region UA1 are in a form extending parallel to each other. Also, the width of the non-illuminated region UA1 is narrower than that of the non-illuminated region UA2 (indicated by broken lines in FIG. 4) of the second high beam distribution pattern to be described later.

Also, when the low beam shade 32 is in the advanced state, an individual low beam distribution pattern PL1 as shown in FIG. 4B is formed by irradiated light from the first lamp unit 20. The individual low beam distribution pattern PL1 shown in FIG. 4B, which is a left-hand low beam distribution pattern, has a cutoff line CL1, a cutoff line CL2, and a cutoff line CL3 on different levels from each other at the top end thereof. The cutoff line CL1, the cutoff line CL2 and the cutoff line CL3 are all light-dark boundary lines formed by the ridge line 33a, the ridge line 33b and the ridge line 33c respectively of the low beam shade 32.

The cutoff line CL1 is formed such that it extends parallel with the horizontal line H-H on the right side of the vertical line V-V The cutoff line CL1 is a cutoff line on the side of the oncoming traffic lane. The cutoff line CL2 is formed such that it extends parallel with the horizontal line H-H on the left side of the vertical line V-V in a position higher than the cutoff line CL1. The cutoff line CL2 is a cutoff line on the side of the driver's own lane. And the cutoff line CL3 is formed as a sloping cutoff line connecting a V-V line side end of the cutoff line CL2 with a V-V line side end of the cutoff line CL1. The cutoff line CL3 extends obliquely from the intersection of the cutoff line CL1 and the V-V line toward upper left at an angle of 45 degrees.

A second high beam distribution pattern PH2 as shown in FIG. 5A is formed by irradiated light from the second lamp unit when the low beam shade 52 is in the retreated state. The second high beam distribution pattern PH2 has an illuminated region IA2 and a non-illuminated region UA2 side by side horizontally in areas above the cutoff lines of a low beam distribution pattern to be described layer. Also, the second high beam distribution pattern PH2 is so shaped that the boundary between the illuminated region IA2 and the non-illuminated region UA2 is dislocated horizontally from the boundary between the illuminated region IA1 and the non-illuminated region UA1 in the first high beam distribution pattern PH1. More specifically, the second high beam distribution pattern PH2 is a recessed light distribution pattern which has a non-illuminated region UA2, of a greater width than the non-illuminated region UA1 of the first high beam distribution pattern PH1, in a middle part of areas above the cutoff lines of the low beam distribution pattern and an illuminated region IA2 on each side of the non-illuminated region UA2. Note that this recessed light distribution pattern (PH2) is approximately grooved-shape in cross section as shown in FIG. 5A. The non-illuminated region UA2, which is a region projected as a reverted image of the part blocked by the protruding part 50c of the second shade 50, has a side surface becoming wider as it is further apart or higher from the horizontal line H-H. Note that when the protruding part 50c has left and right surface geometries extending parallel to each other, the left and right side surfaces of the non-illuminated region UA2 are in a shape extending parallel to each other. Also, the width of the non-illuminated region UA2 is wider than that of the non-illuminated region UA1 (indicated by broken lines in FIG. 5A) of the first high beam distribution pattern PH1.

When the low beam shade 52 is in the advanced state, an individual low beam distribution pattern PL2 as shown in FIG. 5B is formed by irradiated light from the second lamp unit. The individual low beam distribution pattern PL2 shown in FIG. 5B, which is a left-hand low beam distribution pattern, is of the same shape as the individual low beam distribution pattern PL1 and has cutoff lines CL1, CL2 and CL3. The cutoff lines CL1, CL2 and CL3 are all light-dark boundary lines formed by the ridge line 53a, the ridge line 53b and the ridge line 53c respectively of the low beam shade 52.

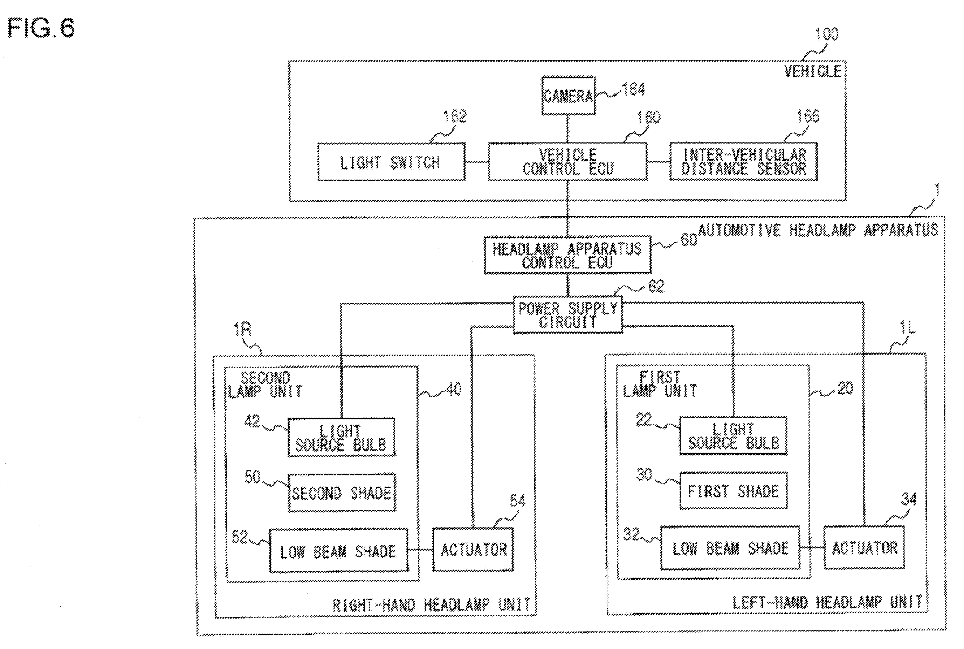

FIG. 6 is a control block diagram of an automotive headlamp apparatus according to the present embodiment.

As shown in FIG. 6, a right-hand headlamp unit 1R is provided with a second lamp unit 40. The second lamp unit 40 includes a light source bulb 42, a second shade 50, a low beam shade 52, and an actuator 54. The automotive headlamp apparatus 1 is also equipped with a headlamp apparatus control ECU (control unit) 60 which controls the formation of the first high beam distribution pattern PH1 and the second high beam distribution pattern PH2 based on positional information on a vehicle-in-front obtained by a vehicle detecting unit to be described later. The automotive headlamp apparatus 1 also includes a power supply circuit 62 that supplies electric power to light up the light source bulbs 22 and 42 and to drive the actuators 34 and 54 to the first lamp unit 20 and the second lamp unit 40 in response to the control signals from the headlamp apparatus control ECU 60.

A vehicle 100 is equipped with a vehicle control ECU 160 that executes various controls of the vehicle 100. Connected to the vehicle control ECU 160 is a light switch 162 to be operated by the driver. The light switch 162 is a switch by which to manually turn on or turn off the first lamp unit 20 and the second lamp unit 40. Also connected to the vehicle control ECU 160 is a camera 164 that can capture images in front of the driver's vehicle. The images captured by the camera 164 are sent to the vehicle control ECU 160, which performs an image analysis by processing the signals and thereby detects a vehicle or vehicles within the captured range. Also connected to the vehicle control ECU 160 is an inter-vehicle distance sensor 166 that can detect the distance between a vehicle-in-front detected by the vehicle control ECU 160 and the driver's own vehicle. The inter-vehicle distance sensor 166 may be provided with a laser radar mechanism, for instance. The vehicle control ECU 160 can determine the position of the vehicle-in-front, using the information gained by the camera 164 and the inter-vehicle distance sensor 166. In the present embodiment, the vehicle control ECU 160, the camera 164 and the inter-vehicle distance sensor 166 constitute the vehicle detecting unit. It is to be noted that the constitution of the vehicle detecting unit is not limited thereto, but a vehicle detecting means capable of detecting a vehicle from the image taken by the camera 164 may be provided without using the vehicle control ECU 160. Also, the vehicle detecting means may be provided on the automotive headlamp apparatus 1, and further the vehicle detecting means may be a headlamp apparatus control ECU 60.

When the driver operates the light switch 162 and then the vehicle control ECU 160 receives an instruction to light up the first lamp unit 20 and the second lamp unit 40 from the driver, the vehicle control ECU 160 outputs control signals to the headlamp apparatus control ECU 60. The headlamp apparatus control ECU 60 performs the control of turning on or off of the lamp units by controlling the power supply circuit 62 in response to the control signals from the vehicle control ECU 160. For example, when the driver gives an instruction to turn on a low beam, individual low beam distribution patterns PL1 and PL2 are formed with the light source bulbs 22 and 42 lighting up and the low beam shades 32 and 52 moved to the advanced position by the operation of the actuators 34 and 54. Thus an illumination in low beam is performed with the individual low beam distribution patterns superposed on each other. Also, when the driver indicates an automatic formation control of light distribution pattern according to the position of a vehicle-in-front, various light distribution patterns are formed with the light source bulbs 22 and 42 lighting up and the low beam shades 32 and 52 adjusted by the operation of the actuators 34 and 54. Thus optimum light distribution patterns will be formed according to the position of the vehicle-in-front as the various light distribution patterns are superposed on each other.

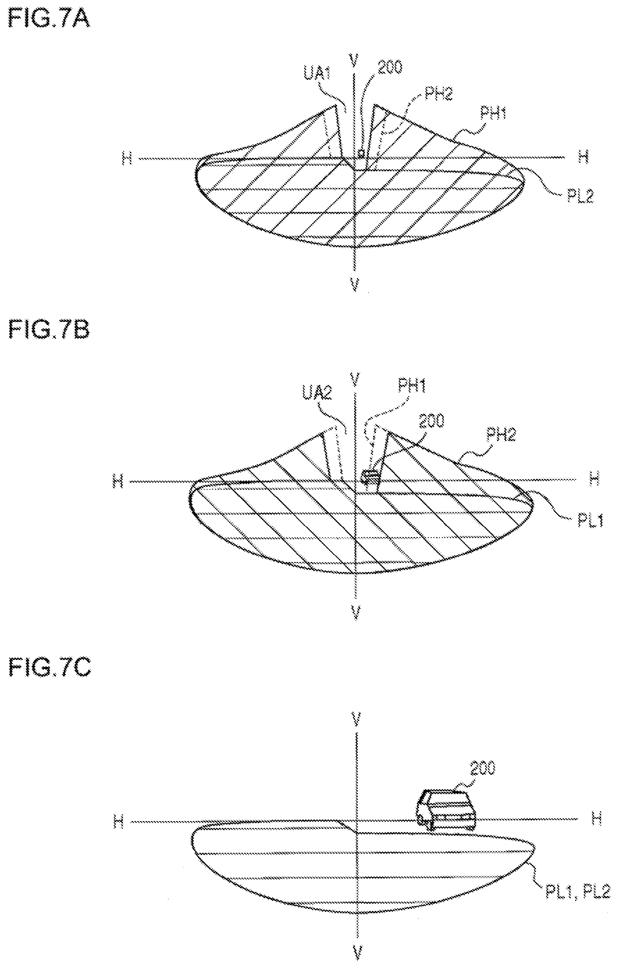

Now the automatic formation control of light distribution pattern will be described. FIG. 7A shows a light distribution pattern when a vehicle-in-front is in a long-range area. FIG. 7B shows a light distribution pattern when the vehicle-in-front is in a middle-range area. FIG. 7C shows a light distribution pattern when the vehicle-in-front is in a close-range area. In this embodiment, the description is given of a light distribution pattern formation control according to the distance to a vehicle-in-front when the driver's vehicle is running on a straight road as an example.

When an automatic formation control of light distribution pattern is indicated by the driver, the headlamp apparatus control ECU 60 forms a second high beam distribution pattern PH2 when the vehicle-in-front is relatively close and a first high beam distribution pattern PH1 when the vehicle-in-front is relatively far, based on the distance information gained by the vehicle detecting unit. Normally, the existent range of a vehicle-in-front keeps moving horizontally outward from near the vanishing point where the H-H line and the V-V line intersect as the vehicle-in-front approaches the driver's vehicle. Therefore, a first high beam distribution pattern PH1 with a narrow shading width is formed when the vehicle-in-front is farther than a predetermined distance and thus its existent range is located within the non-illuminated region UA1 near the vanishing point. On the other hand, a second high beam distribution pattern PH2 with a wide shading width is formed when the vehicle-in-front is at middle range closer than the predetermined distance and thus the vehicle-in-front has moved out of the non-illuminated region UA1.

More specifically, the headlamp apparatus control ECU 60 divides the detection range of the vehicle detecting unit, for example, into the close-range area, the middle-range area and the long-range area according to the distance from the driver's vehicle. Note here that the long-range area represents the distance where the vehicle-in-front is located within the non-illuminated region UA1 of the first high beam distribution pattern PH1. The middle-range area represents the distance where the vehicle-in-front has moved out of the non-illuminated region UA1 of the first high beam distribution pattern PH1, but is still located within the non-illuminated region UA2 of the second high beam distribution pattern PH2. And the close-range area represents the distance where the vehicle-in-front has moved out of the non-illuminated region UA2 of the second high beam distribution pattern PH2. The headlamp apparatus control ECU 60 has the detection range information of the camera 164 and the distance information about the close-range area, the middle-range area and the long-range area stored in a storage unit. Thus, the detection range of the vehicle detecting unit can be divided into these areas using the stored information.

Thus, as shown in FIG. 7A, when a vehicle-in-front 200 detected by the vehicle detecting unit is in the long-range area, the headlamp apparatus control ECU 60 has a first high beam distribution pattern PH1 formed by the first lamp unit 20 and an individual low beam distribution pattern PL2 formed by the second lamp unit 40. As a result, the light distribution pattern is a combination of the first high beam distribution pattern PH1 and the individual low beam distribution pattern PL2. Also, as shown in FIG. 7B, when the vehicle-in-front 200 is in the middle-range area, the headlamp apparatus control ECU 60 has an individual low beam distribution pattern PL1 formed by the first lamp unit and a second high beam distribution pattern PH2 formed by the second lamp unit. As a result, the light distribution pattern is a combination of the individual low beam distribution pattern PL1 and the second high beam distribution pattern PH2. Also, as shown in FIG. 7C, when the vehicle-in-front 200 is in the close-range area, the headlamp apparatus control ECU 60 has an individual low beam distribution pattern PL1 formed by the first lamp unit 20 and an individual low beam distribution pattern PL2 formed by the second lamp unit 40. As a result, the light distribution pattern is a combination of the individual low beam distribution pattern PL1 and the individual low beam distribution pattern PL2.

Through control as described above, the visibility for the driver can be improved while avoiding glare to the driver in the vehicle-in-front. Moreover, the methodology used herein is so simple that separate high beam distribution patterns are formed by the left and right lamp units and the switching is simply made therebetween according to the distance to the vehicle-in-front. Hence, the present embodiment can simplify the structure and control of an automotive headlamp apparatus and reduce the manufacturing cost thereof. Also, the arrangement may be such that when no vehicle-in-front is detected despite the presence of the automatic formation control of light distribution pattern indicated by the driver, a first high beam distribution pattern PH1 is formed to improve the visibility above the H-H line. It should also be appreciated that the widths of the non-illuminated region UA1 and the non-illuminated region UA2 as well as the ranges of the close-range area, the middle-range area and the long-range area can be set as appropriate based on the designer's experiments and simulation runs.

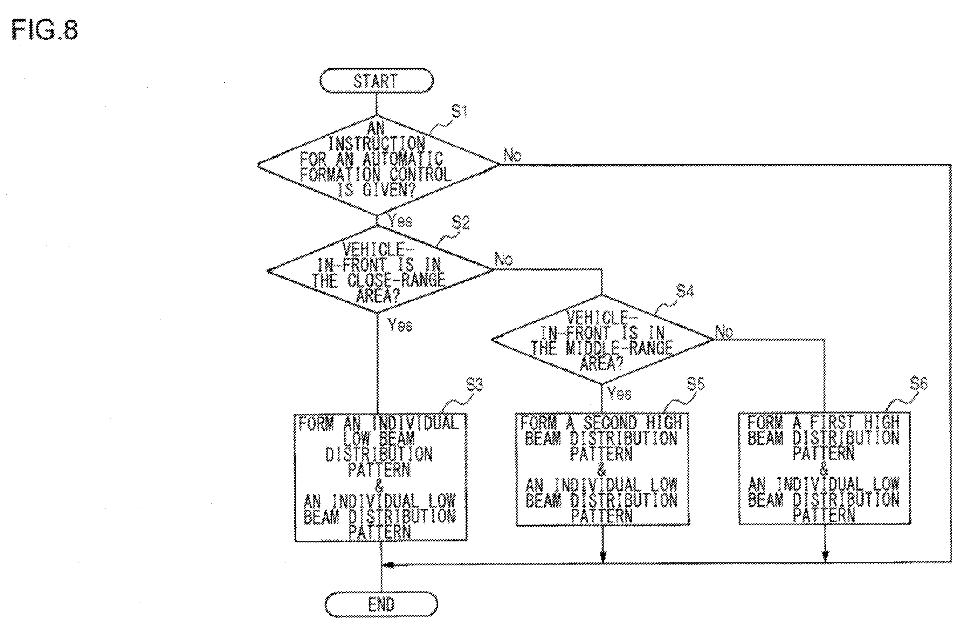

FIG. 8 is a control flowchart for an automatic formation control of light distribution pattern. This process flow is executed at predetermined intervals repeatedly when the automatic formation control of light distribution pattern is selected by the driver.

First, the headlamp apparatus control ECU 60 decides whether there is an instruction for an automatic light distribution pattern formation control or not, based on the control signals from the vehicle control ECU 160 (Step 1: Hereinafter abbreviated as S1, and the other steps will be abbreviated similarly). When there is no instruction for an automatic formation control (No of S1), the present routine is ended. When there is an instruction for an automatic formation control (Yes of S1), the headlamp apparatus control ECU 60 decides whether the vehicle-in-front is in the close-range area or not, based on the result of detection by the vehicle detecting unit (S2). When the vehicle-in-front is in the close-range area (Yes of S2), the headlamp apparatus control ECU 60 performs a control to form an individual low beam distribution pattern PL1 and an individual low beam distribution pattern PL2 (S3).

When the vehicle-in-front is not in the close-range area (No of S2), the headlamp apparatus control ECU 60 decides whether the vehicle-in-front is in the middle-range area or not, based on the result of detection by the vehicle detecting unit (S4). When the vehicle-in-front is in the middle-range area (Yes of S4), the headlamp apparatus control ECU 60 performs a control to form a second high beam distribution pattern PH2 and an individual low beam distribution pattern PL1 (S5). When the vehicle-in-front is not in the middle-range area (No of S4), the headlamp apparatus control ECU 60 decides that there is no vehicle-in-front or the vehicle-in-front is in the long-range area and performs a control to form a first high beam distribution pattern PH1 and an individual low beam distribution pattern PL2 (S6).

The operation performed by and the effects achieved by the structure as described above are summarized as follows. The automotive headlamp apparatus 1 according to the present embodiment determines the existent range of a vehicle-in-front relative to the inter-vehicle distance, forms light distribution patterns, having non-illuminated regions of different sizes and covering the vehicle-existent range, independently by two lamp units, and switches those light distribution patterns according to the distance to the vehicle-in-front. That is, the first high beam distribution pattern PH1 with the non-illuminated region UA1 is formed by the first lamp unit 20, and the second high beam distribution pattern PH2 with the non-illuminated region UA2, which is wider than the non-illuminated region UA1, is formed by the second lamp unit 40. And switching is made between the first high beam distribution pattern PH1 and the second high beam distribution pattern PH2 according to the position of the vehicle-in-front. As a result, the visibility for the driver can be enhanced while avoiding glare to the driver in the vehicle-in-front. Also, compared with a mechanism that changes the light distribution pattern by the swiveling of the lamp units in relation to the front vehicle existent area, the apparatus according to the present embodiment features simpler structure and control and lower manufacturing cost. Accordingly, the present embodiment realizes not only the simplified structure and control and reduced manufacturing cost but also the improved visibility for the driver while avoiding glare to the driver in the vehicle-in-front.

Moreover, the first high beam distribution pattern PH1 and the second high beam distribution pattern PH2 are each formed by a single shade of a fixed shape. Hence, compared with a mechanism that changes the beam distribution pattern by moving a part of the shade in relation to the front vehicle existent area, the structure and control of this system according to the present embodiment are simpler and the manufacturing cost is lower.

Also, the first lamp unit 20 and the second lamp unit 40 are provided with the low beam shades 32 and 52, respectively, so that they can form not only the first high beam distribution pattern PH1 or the second high beam distribution pattern PH2 but also the individual low beam distribution pattern PL1 or PL2. Hence, the first lamp unit 20 and the second lamp unit 40 can serve also as low beam lamp units, thus reducing the number of components. This contributes to further simplification of the automotive headlamp apparatus 1 and the reduction of the manufacturing cost.

Also, the first high beam distribution pattern PH1 and the second high beam distribution pattern PH2 are of a shape with only the middle part thereof above the cutoff line shaded. Hence, compared with a so-called one-sided high beam distribution pattern such as one having a high beam pattern on one side of the V-V line and a low beam pattern on the other, the light distribution pattern created by the headlamp units of the present embodiment causes less of less of an uncomfortable feeling in the driver.

### (Second embodiment)

A second embodiment of an automotive headlamp apparatus differs from the first embodiment in the feature that both the first shade and the second shade are able to advance and retreat with respect to the optical axis. The principal configuration of the automotive headlamp apparatus and the formation control of light distribution pattern are the same as those of the first embodiment. In the following, the structural components identical to those of the first embodiment are given identical reference numerals, and repeated description thereof and its representation by figures will be omitted as appropriate.

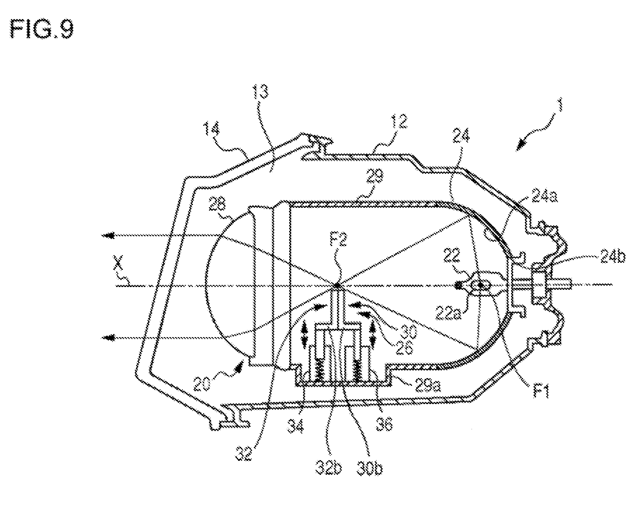

A shade unit 26 provided with an automotive headlamp apparatus 1 according to the second embodiment includes an actuator 36 (drive part) used to move a first shade 30 in the advancing and retreating directions, in addition to the first shade 30, a low-beam shade 32 and an actuator 34. A flange part 30b of the first shade 30 is attached to the top edge of the actuator 36, so that the first shade 30 can be moved in vertical directions in FIG. 9 by the operation of a solenoid, for instance. The lower part of the actuator 36 is fixed to a supporting base 29a. In other words, the actuator 36 can move the first shade 30 in the advancing and retreating directions relative to the optical axis X.

The second lamp unit in the right-hand headlamp unit differs from the first lamp unit 20 only in the feature that the second lamp unit has the second shade having a shape different from that of the first shade 30. Thus the second shade is also capable of advancing and retreating with respect to the optical axis X.

The automotive headlamp apparatus 1 according to the present embodiment enables both the first shade 30 and the second shade 50 to move in the advancing and retreating directions with respect to the optical axis X. Thus, with all of the shades positioned in the retreated state, the automotive headlamp apparatus 1 can form a normal high beam pattern that does not contain the non-illuminated region above cutoff lines. For example, when no vehicle-in-front is detected by the vehicle detecting unit, a normal high beam distribution pattern that does not contain the non-illuminated regions UA1 and UA2 may be formed by combining the light distribution pattern of the first lamp unit 20 formed with the low beam shade 32 and the first shade 30 disposed in the retreated position and the light distribution pattern of the second lamp unit 40 formed with the low beam shade 52 and the second shade 50 disposed in the retreated position.

The control flow may be as follows, for instance. That is, in the control flow shown in FIG. 8, when the vehicle-in-front is not in the middle-range area (No of S4 in FIG. 8), the headlamp apparatus control ECU 60 decides whether the vehicle-in-front is in the long-range area or not. When the vehicle-in-front is in the long-range area, the headlamp apparatus control ECU 60 performs a control to form a first high beam distribution pattern PH1 and an individual low beam distribution pattern PL2 (S6 in FIG. 8). On the other hand, when the vehicle-in-front is not in the long-range area, the headlamp apparatus control ECU 60 forms a normal high beam distribution pattern.

By employing the above-described structure and performing the above-described control, the visibility for the driver improves while glare experienced by the driver in the vehicle-in-front is avoided. Adding the single actuator 36 allows the automotive headlamp apparatus 1 to have a function as a high beam lamp. Compared with the first embodiment, the automotive headlamp apparatus 1 according to the second embodiment may have a complex structure in terms of the structure for the lamp units because the actuator 36 is newly added in the second embodiment. Nevertheless, when viewed in its entirety, the automotive headlamp apparatus according to the second embodiment is simplified and therefore the manufacturing cost can be reduced because no separate high beam lamp needs to be provided. Also, various types of light distribution patterns are formed by only the advancing or retreating movement of each shade, so that the control is performed easier as compared with the conventional structure. Thus, the second embodiment realizes not only the simplified structure and control and reduced manufacturing cost but also the improved visibility for the driver while avoiding glare experienced by the driver in the vehicle-in-front.

### (Third embodiment)

A third embodiment of an automotive headlamp apparatus differs from the first embodiment in the shapes of the first shade and the second shade. The third embodiment is now described hereinbelow. The principal configuration of the automotive headlamp apparatus and the formation control of light distribution pattern are the same as those of the first embodiment. Hereinbelow, the structural components identical to those of the first embodiment are given the identical reference numerals, and the repeated description thereof and its representation by figures will be omitted as appropriate.

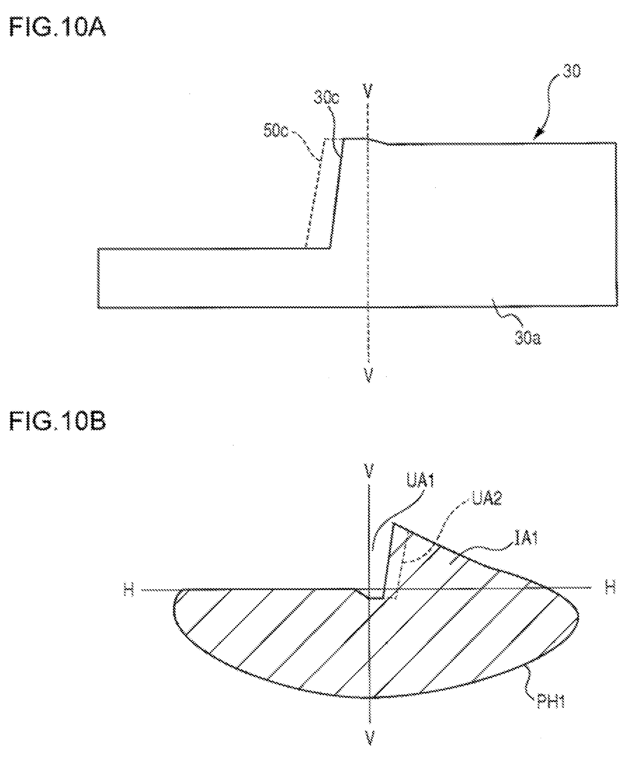

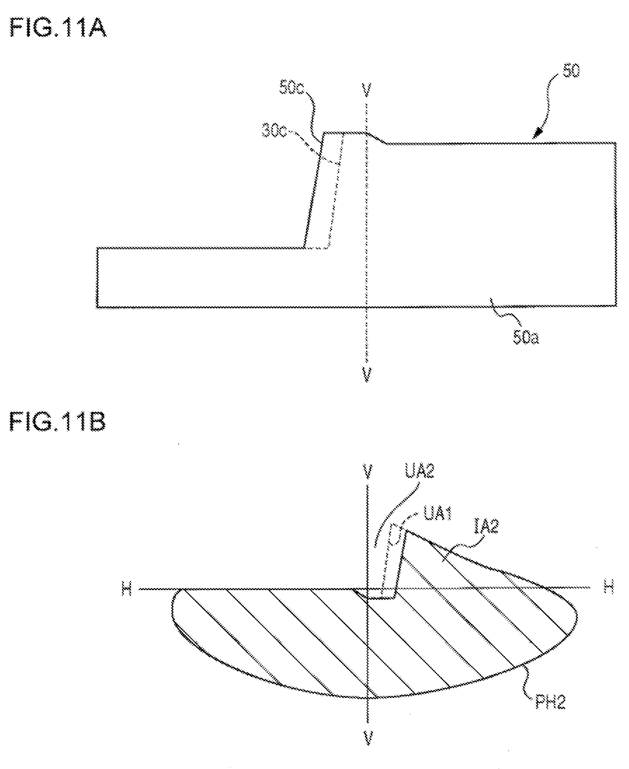

FIG. 10A is a schematic front view of a first shade in an automotive headlamp apparatus according to the third embodiment of the present invention. FIG. 10B is an illustration showing a first high beam distribution pattern formed by a first lamp unit. FIG. 11A is a schematic front view of a second shade. FIG. 11B is an illustration showing a second high beam distribution pattern formed by a second lamp unit. The flange part is omitted in FIGS. 10A and 11A. In FIGS. 10B and 11B, a light distribution pattern formed on a virtual vertical screen set at a point in front of the lamps, for example, at a point 25 meters ahead of a vehicle.

As shown in FIG. 10A, in a light shielding part 30a of a first shade 30 according to the third embodiment, a protruding part 30c extends from a middle part to the right side of vehicle width direction (on the side of the oncoming traffic lane). A side wall of the protruding part 30c on the left side of vehicle width direction (on the side of the driver's own lane) is positioned on the driver's own lane side relative to the V-V line and is located in a position closer to the V-V line than a side wall of a protruding part 50c of the second shade 50 (indicated by broken lines in FIG. 10A).

A first high beam distribution pattern PH1 as shown in FIG. 10B is formed by irradiated light from the first lamp unit 20 when the low beam shade 32 is in the retreated state. The first high beam distribution pattern PH1 has an illuminated region IA1 and a non-illuminated region UA1 side by side horizontally in areas above the cutoff lines of the low beam distribution pattern. More specifically, the first high beam distribution pattern PH1 according to the third embodiment has a non-illuminated region UA1 in a middle part of areas above the cutoff lines of the low beam distribution pattern and on the driver's own lane side of said middle part thereof and has an illuminated region IA1 on the oncoming traffic lane side of the non-illuminated region UA1. In other words, the first high beam distribution pattern PH1 is a right-sided high beam distribution pattern that forms a so-called "right-sided high beam". The right-sided high beam distribution pattern is a light distribution pattern that shades the driver's own lane side of high beam distribution pattern and irradiates only the oncoming traffic lane side using a high beam region, while the vehicle is driving on the left lane. The right-sided high beam distribution pattern is preferably used for a case in which there is no oncoming vehicle and pedestrian in the oncoming traffic lane and there is a forerunning vehicle (forerunning vehicles) or pedestrian (pedestrians) in the driver's own lane. Thus the oncoming traffic lane side only is irradiated with high beam without giving glare to the driver in the forerunning vehicle or pedestrians, so that the visibility for the driver can be improved. The non-illuminated region UA1 corresponds to the protruding part 30c of the first shade 30c. The width of the non-illuminated region UA1 is narrower than that of the non-illuminated region UA2 (indicated by broken lines in FIG. 10B) of a second high beam distribution pattern PH2.

As shown in FIG. 11A, in a light shielding part 50a of a second shade 50 according to the third embodiment, a protruding part 50c extends from a middle part to the right side of vehicle width direction (on the side of the oncoming traffic lane). A side wall of the protruding part 50c on the left side of vehicle width direction (on the side of the driver's own lane) is positioned on the driver's own lane side relative to the V-V line and is located in a position farther from the V-V line than the side wall of the protruding part 30c of the first shade 30 (indicated by broken lines in FIG. 11A).

The second high beam distribution pattern PH2 as shown in FIG. 11B is formed by irradiated light from the second lamp unit when the low beam shade 52 is in the retreated state. The second high beam distribution pattern PH2 has an illuminated region IA2 and a non-illuminated region UA2 side by side horizontally in areas above the cutoff lines of the low beam distribution pattern. Also, the second high beam distribution pattern PH2 is so shaped that the boundary between the illuminated region IA2 and the non-illuminated region UA2 is dislocated horizontally from the boundary between the illuminated region IA1 and the non-illuminated region UA1 in the first high beam distribution pattern PH1. More specifically, the second high beam distribution pattern PH2 according to the third embodiment has a non-illuminated region UA2, of a width different from the non-illuminated region UA1 of the first high beam distribution pattern PH1, in a middle part of areas above the cutoff lines of the low beam distribution pattern and on the driver's own lane side of said middle part thereof and has an illuminated region IA2 on the oncoming traffic lane side of the non-illuminated region UA2. In other words, the second high beam distribution pattern PH2 is a right-sided high beam distribution pattern that forms the so-called "right-sided high beam". The non-illuminated region UA2 corresponds to the protruding part 50c of the second shade 50. The width of the non-illuminated region UA2 is wider than that of the non-illuminated region UA1 (indicated by broken lines in FIG. 11B) of the first high beam distribution pattern PH1.

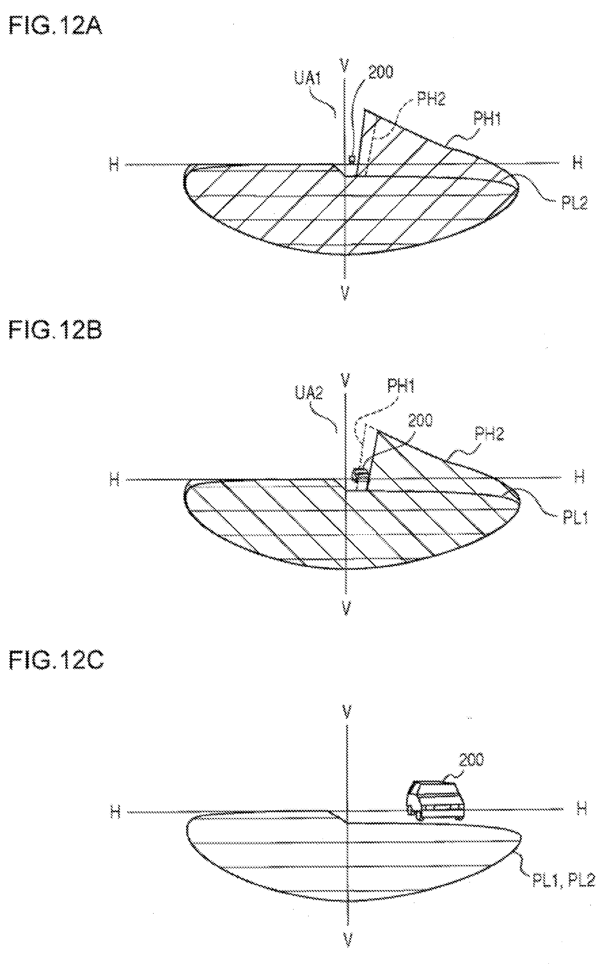

The automatic formation control, of light distribution pattern, according to the third embodiment will now be described. FIG. 12A shows a light distribution pattern when an oncoming vehicle is in a long-range area. FIG. 12B shows a light distribution pattern when the oncoming vehicle is in a middle-range area. FIG. 12C shows a light distribution pattern when the oncoming vehicle is in a close-range area.

When an automatic formation control of light distribution pattern is indicated by the driver, the headlamp apparatus control ECU 60 forms a second high beam distribution pattern PH2 when the oncoming vehicle is relatively close and a first high beam distribution pattern PH1 when the oncoming vehicle is relatively far, based on the distance information gained by the vehicle detecting unit.

More specifically, the headlamp apparatus control ECU 60 divides the detection range of the vehicle detecting unit, for example, into the close-range area, the middle-range area and the long-range area. Thus, as shown in FIG. 12A, when a vehicle-in-front 200 approaching in the oncoming traffic lane, namely an oncoming vehicle (approaching vehicle) is in the long-range area, the headlamp apparatus control ECU 60 has a first high beam distribution pattern PH1 formed by the first lamp unit 20 and an individual low beam distribution pattern PL2 formed by the second lamp unit 40. Also, as shown in FIG. 12B, when the vehicle-in-front 200 approaching in the oncoming traffic lane is in the middle-range area, the headlamp apparatus control ECU 60 has an individual low beam distribution pattern PL1 formed by the first lamp unit and a second high beam distribution pattern PH2 formed by the second lamp unit. Also, as shown in FIG. 12C, when the vehicle-in-front 200 approaching in the oncoming traffic lane is in the close-range area, the headlamp apparatus control ECU 60 has an individual low beam distribution pattern PL1 formed by the first lamp unit 20 and an individual low beam distribution pattern PL2 formed by the second lamp unit 40.

By employing the structure and performing the control as described above, the visibility for the driver can be improved while avoiding glare to the driver in the vehicle-in-front. Also, the structure and control of an automotive headlamp apparatus are simplified and the manufacturing cost thereof is reduced. Furthermore, according to the third embodiment, the first high beam distribution pattern PH1 and the second high beam distribution pattern PH2 are each a right-sided high beam distribution pattern. Hence, the visibility for the driver in the oncoming traffic lane can be improved while more reliably avoiding the glare to the driver in the forerunning vehicle traveling in the driver's own lane. Even if the forerunning vehicle is in the middle-range area or close-range area, the first high beam distribution pattern PH1 can be formed as long as there is no oncoming vehicle or the oncoming vehicle is in the long-range area. Thus, the visibility for the driver in an area on the oncoming traffic lane can be further improved. Note that, in the individual low beam distribution pattern PL1 and the low beam distribution pattern PL2, the cutoff line CL2 on the driver's own lane side is set to a position higher than the position of the cutoff line CL1 on the oncoming traffic lane side. Thus, the visibility for the driver in the driver's own lane is higher than that in the oncoming traffic lane when the individual low beam distribution patterns PL1 and PL2 have been formed. As a result, even if the illuminated regions IA1 and IA2 are provided only on the oncoming traffic lane side as in the first high beam distribution pattern PH1 and the second high beam distribution pattern PH2 according to the present embodiment, the visibility for the driver in the driver's own lane can be secured to a certain degree.

The present invention is not limited to each of the above-described embodiments only, and those resulting from any combination of the embodiments are effective as embodiments. Also, it is understood by those skilled in the art that various modifications such as changes in design may be added to each of the embodiments based on their knowledge and newly combined embodiments or embodiments added with such modifications are also within the scope of the present invention. Any new embodiments resulting from the combination of any two or more of the above-described embodiments or the combination of any of the above-described embodiments with any of the following modifications has each an advantageous effect enjoyed by each of the original embodiment and modification as well.

### (First modification)

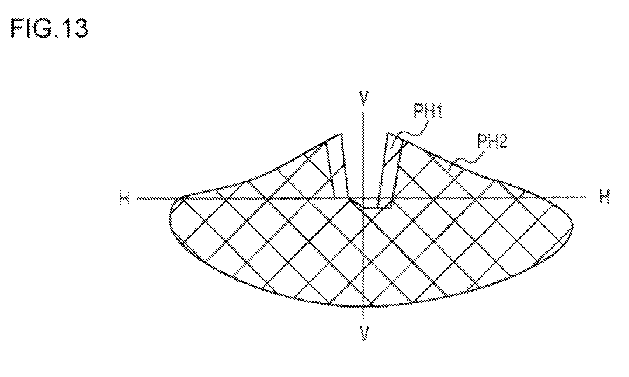

The following modification may be made to the automotive headlamp apparatus 1 of the first and second embodiments. FIG. 13 is an illustration showing a light distribution pattern when the vehicle-in-front in a first modification is in the long-range area.

In the first modification, when forming the first high beam distribution pattern PH1, the headlamp apparatus control ECU 60 performs a control to additionally form the second high beam distribution pattern PH2. For example, when a vehicle-in-front detected by the vehicle detecting unit is in the long-range area, the first high beam distribution pattern PH1 is formed by the first lamp unit 20 and the second high beam distribution pattern PH2 is formed by the second high lamp unit 40 as illustrated in FIG. 13, which differs from the above-described case in conjunction with FIG. 7A. Then a light distribution pattern is formed by combining the first high beam distribution pattern PH1 with the second high beam distribution pattern PH2.

In the light distribution pattern formed by combining the first and second high beam distribution patterns PH1 and PH2, a non-illuminated region having the same width as that of the light distribution pattern shown in FIG. 7A is formed in the middle part above the cutoff lines. Thus, glare to the driver in the vehicle-in-front can be avoided similarly. On the other hand, the first high beam distribution pattern PH1 and the second high beam distribution pattern PH2 are superposed on each other in part of the areas above the cutoff lines excluding the non-illuminated region and the vicinities of the sides thereof. As a result, the illumination intensity can be enhanced as compared with the case of FIG. 7A and therefore the visibility for the driver can be further enhanced.

If the first high beam distribution pattern PH1 alone gives sufficient illumination intensity, the second lamp unit 40 may be switched off or the second lamp unit 40 may be used with a low illumination intensity enough to inform the drivers in other vehicles or pedestrians of the existent of the driver's vehicle. In this manner, the electrical power can be saved.

Though not illustrated here, the similar modification can be made to the automotive headlamp apparatus 1 of the third embodiment. That is, when forming the first high beam distribution pattern PH1 for the automotive headlamp apparatus 1 according to the third embodiment, the headlamp apparatus control ECU 60 performs a control to additionally form the second high beam distribution pattern PH2. In this case, too, the visibility for the driver can be further enhanced.

### (Other modifications)

In the first to third embodiments, the formation of light distribution pattern is controlled in response to the distance between a vehicle-in-front and the driver's vehicle. In another modification, the formation of light distribution pattern may be controlled in response to the angle of vehicle-existing position formed between a straight line connecting the driver's vehicle and the vehicle-in-front and the optical axis X, in addition to the inter-vehicle distance. That is, if there is a curve or left/right turn road within a predetermined distance ahead of the driver's vehicle, there may be cases where the vehicle-in-front moves out of the non-illuminated regions UA1 and UA2 even though the vehicle-in-front is in the long-range area or the middle-range area. For that reason, if the angle of vehicle-existing position is a predetermined angle or above, a light distribution pattern may be formed by combining the individual low beam distribution pattern PL1 with the individual low beam distribution pattern PL2, regardless of the inter-vehicle distance. Note that the predetermined angle is an angle at which the vehicle-in-front moves out of the non-illuminated region UA1 when it is in the long-range area or an angle at which the vehicle-in-front moves out of the non-illuminated region UA2 when it is in the middle-range area. In this case, the automotive control ECU 160 stores the detection range information of the camera 164, the distance information about the close-range area, the middle-range area and the long-range area, and the angle information about the existent ranges of the non-illuminated regions UA1 and UA2 in the storage unit. Thus, the detection range of the vehicle detecting unit can be divided into these areas using the stored information, and the formation control of light distribution pattern according to the angle of vehicle-existing position can be performed. Note that the formation control of light distribution pattern based solely on the angle of vehicle-existing position may be performed.

In the first to third embodiments, the first lamp unit 20 and the second lamp unit 40 each function as a low beam lamp. In still another modification, the first lamp unit 20 and the second lamp unit 40 may be so structured as to be able to only form the first high beam distribution pattern PH1 or the second high beam distribution pattern PH2. As a result, the structure and control of the first lamp unit 20 and the second lamp unit 40 can be further simplified. Also, the first lamp unit 20 and the second lamp unit 40 can be not only structured as the low beam and high beam lamp units but also structured as intermediate lamp units. If the intermediate lamp units are provided for a vehicle having normal low beam and high beam lamp units, advantageous effects achieved by the intermediate lamp units can be enjoyed using the existing lamp units.

A high beam distribution pattern having a non-illuminated region of width different from the widths of the non-illuminated regions UA1 and UA2 may be further formed as long as this modification can still contribute to the simplification of structure and control and the reduction of manufacturing cost. According to this modification, the visibility for the driver can be further enhanced. Also, the structure may be such that the right-hand headlamp unit 1R is provided with the first lamp unit 20 and the left-hand headlamp unit 1L is provided with the second lamp unit 40. Also, the light source may be a light emitting device such as an LED (Light Emitting Diode).

The second embodiment is such that the structure of advancing and retreating the first shade 30 and the second shade 50 relative to the optical axis is added to the first embodiment. The same structure can be added to the third embodiment. In the first and third embodiments, the normal high beam distribution pattern, which does not contain the non-illuminated regions UA1 and UA2, may be formed by an exclusive-use lamp unit.

The invention is not restricted to the described features of the embodiments, but instead extends to the full scope of the appended claims.

## Claims

1. An automotive headlamp apparatus (1) comprising:
a first lamp unit (20) capable of forming a first high beam distribution pattern (PH1) which has an illuminated region (IA1) and a non-illuminated region (UA1) side by side horizontally in areas above cutoff lines (CL1, CL2, CL3) of a low beam distribution pattern;
a second lamp unit (40) capable of forming a second high beam distribution pattern (PH2) which has an illuminated region (IA2) and a non-illuminated region (UA2) side by side horizontally in areas above cutoff lines (CL1, CL2, CL3) of a low beam distribution pattern, wherein a boundary between the illuminated region (IA2) and the non-illuminated region (UA2) is dislocated horizontally from a boundary between the illuminated region (IA1) and the non-illuminated region (UA1) in the first high beam distribution pattern (PH1); and
a control unit (60) for controlling the formation of the first high beam distribution pattern (PH1) and the second high beam distribution pattern (PH2) based on positional information on a vehicle-in-front (200) obtained by a vehicle detecting unit (160, 164, 166) and
wherein the first high beam distribution pattern (PH1) has a non-illuminated region (UA1) in a middle part of areas above the cutoff lines (CL1, CL2, CL3) of the low beam distribution pattern and an illuminated region (IA1) on each side of the non-illuminated region (UA1), and
wherein the second high beam distribution pattern (PH2) has a non-illuminated region (UA2), which is of a different width from the non-illuminated region (UA1) of the first high beam distribution pattern (PH1), in a middle part of areas above the cutoff lines (CL1, CL2, CL3) of the low beam distribution pattern and an illuminated region (IA2) on each side of the non-illuminated region (UA2)
**characterised in that** the first lamp unit (20) is provided with a light source (22a) and a first shade (30) which has a protruding part (30c), in a middle part, protruding vertically relative to a vehicle width direction and which **is configured to form** the first high beam distribution pattern (PH1) by partially shielding light directed from the light source (22a),
wherein the second lamp unit (40) is provided with a light source and a second shade (50) which has a protruding part (50c), in a middle part, protruding vertically relative to the vehicle width direction and which **is configured to form** the second high beam distribution pattern (PH2) by partially shielding light directed from the light source, the width of the protruding part (50c) of the second shade (50) being wider than the width of the protruding part (30c) of the first shade (30), and
wherein the control unit (60) **is configured to form** the second high beam distribution pattern (PH2) when the vehicle-in-front (200) is relatively close, and
**to form** the first high beam distribution pattern (PH1) when the vehicle-in-front (200) is relatively far.

2. Apparatus according to Claim 1, wherein the first lamp unit (20) and the second lamp unit (40), capable of advancing and retreating with respect to an optical axis of the light source, include low beam shades (32, 52) capable of forming individual low beam distribution patterns (PL1, PL2), respectively, in an advanced position and drive parts (34, 54) which move the low-beam shades (32, 52) in advancing and retreating directions, respectively,
wherein when the low beam shades (32, 52) are in retreated positions, the first lamp unit (20) and the second lamp unit (40) are **configured to form** the first high beam distribution pattern (PH1) and the second high beam distribution pattern (PH2), respectively, and
wherein the control unit (60) **is configured to** divide a detection range of the vehicle detecting unit (160, 164, 166) into a close-range area, a middle-range area and a long-range area, and
when the vehicle-in-front (200) is in the close-range area, a light distribution pattern is formed by combining the individual low beam distribution pattern (PL1, PL2) of the first lamp unit (20) and the second lamp unit (40),
when the vehicle-in-front (200) is in the middle-range area, a light distribution pattern is formed by combining the individual low beam distribution pattern (PL1) of the first lamp unit (20) with the second high beam distribution pattern (PH2) of the second lamp unit (40), and
when the vehicle-in-front (200) is in the long-range area, a light distribution pattern is formed by combining the first high beam distribution pattern (PH1) of the first lamp unit (20) with the individual low beam distribution pattern (PL2) or second high beam distribution pattern (PH2) of the second lamp unit (40).

3. Apparatus according to Claim 2, wherein when forming the first high beam distribution pattern (PH1), the control unit (60) additionally **is configured to form** the second high beam distribution pattern (PH2).

4. Apparatus according to Claim 2 or 3, wherein the first shade (30) and the second shade (50) are capable of advancing and retreating with respect to an optical axis of the light source,
wherein the automotive headlamp apparatus (1) further includes drive parts which move the first shade (30) and the second shade (50) in advancing and retreating directions, respectively,
wherein when the vehicle detecting unit does not detect the vehicle-in-front (200), the control unit (60) **is configured to form** a light distribution patter in such manner that a light distribution pattern of the first lamp unit (20) formed with the low beam shade (32) and the first shade (30) disposed in a retreated position is combined with a light distribution pattern of the second lamp unit (40) formed with the low beam shade (52) and the second shade (50) disposed in a retreated position.

5. Apparatus according to any one of Claim 1 to Claim 4, wherein the control unit (60) **is configured to control** the formation of the first high beam distribution pattern (PH1) and the second high beam distribution pattern (PH2) in response to an angle formed between a straight line connecting a driver's vehicle and the vehicle-in-front (200) and an optical axis of each lamp unit (20, 40).

## Patentansprüche

1. Fahrzeugscheinwerfervorrichtung (1), mit:
einer ersten Lampeneinheit (20), die in der Lage ist, ein erstes Fernlichtverteilungsmuster (PH1) zu bilden, welches eine beleuchtete Region (IA1) und eine nicht beleuchtete Region (UA1) horizontal Seite an Seite in Bereichen oberhalb von Begrenzungslinien (CL1, CL2, CL3) eines Abblendlichtverteilungsmusters aufweist;
einer zweiten Lampeneinheit (40), die in der Lage ist, ein zweites Fernlichtverteilungsmuster (PH2) zu bilden, welches eine beleuchtete Region (IA2) und eine nicht beleuchtete Region (UA2) horizontal Seite an Seite in Bereichen oberhalb von Begrenzungslinien (CL1, CL2, CL3) eines Abblendlichtverteilungsmusters aufweist, wobei eine Grenze zwischen der beleuchteten Region (IA2) und der nicht beleuchteten Region (UA2) horizontal von einer Begrenzung zwischen der beleuchteten Region (IA1) und der nicht beleuchteten Region (UA1) in dem ersten Fernlichtverteilungsmuster (PH1) verschoben ist; und
eine Steuerungseinheit (60) zum Steuern der Ausbildung des ersten Fernlichtverteilungsmusters (PH1) und des zweiten Fernlichtverteilungsmusters (PH2) basierend auf Positionsinformationen über ein vorausfahrendes Fahrzeug (200), welche von einer Fahrzeugdetektionseinheit (160, 164, 166) erhalten werden, und
wobei das erste Fernlichtverteilungsmuster (PH1) eine nicht beleuchtete Region (UA1) in einem mittleren Teil von Bereichen oberhalb der Begrenzungslinien (CL1, CL2, CL3) des Abblendlichtverteilungsmusters und eine beleuchtete Region (IA1) auf jeder Seite der nicht beleuchteten Region (UA1) aufweist, und
wobei das zweite Fernlichtverteilungsmuster (PH2) eine von der nicht beleuchteten Region (UA1) des ersten Fernlichtverteilungsmusters (PH1) verschiedenenicht beleuchtete Region (UA2) in einem mittleren Teil von Bereichen oberhalb der Begrenzungslinien (CL1, CL2, CL3) des Abblendlichtverteilungsmusters und eine beleuchtete Region (IA2) auf jeder Seite der nicht beleuchteten Region (UA2) aufweist,
**dadurch gekennzeichnet, dass**
die erste Lampeneinheit (20) mit einer Lichtquelle (22a) und einer ersten Blende (30) versehen ist, die einen vorstehenden Teil (30c) in einem mittleren Teil aufweist, der vertikal bezüglich einer Fahrzeugbreitenrichtung vorsteht, und die konfiguriert ist, um das erste Fernlichtverteilungsmuster (PH1) durch teilweises Abschirmen von Licht zu bilden, das von der Lichtquelle (22a) aus gerichtet wird,
wobei die zweite Lampeneinheit (40) mit einer Lichtquelle und einer zweiten Blende (50) versehen ist, die einen vorstehenden Teil (50C) in einem mittleren Teil aufweist, der vertikal bezüglich einer Fahrzeugbreitenrichtung vorsteht, und die konfiguriert ist, um das zweite Fernlichtverteilungsmuster (PH2) durch teilweises Abschirmen von Licht zu bilden, das von der Lichtquelle aus gerichtet wird, wobei die Breite des vorstehenden Teils (50c) der zweiten Blende (50) breiter ist als die Breite des vorstehenden Teils (30c) der ersten Blende (30), und
wobei die Steuerungseinheit (60) konfiguriert ist, um das zweite Fernlichtverteilungsmuster (PH2) zu bilden, wenn das vorausfahrende Fahrzeug (200) relativ nahe ist, und
um das erste Fernlichtverteilungsmuster (PH1) zu bilden, wenn das vorausfahrende Fahrzeug (200) relativ weit weg ist.

2. Vorrichtung nach Anspruch 1, wobei die erste Lampeneinheit (20) und die zweite Lampeneinheit (40), die in der Lage sind, in Bezug auf eine optische Achse der Lichtquelle vorzurücken und sich zurückzuziehen, Abblendlichtblenden (32, 52), die in der Lage sind, jeweils individuelle Abblendlichtverteilungsmuster (PL1, PL2) in einer vorgerückten Position zu bilden, und Antriebsteile (34, 54) beinhalten, welche die Abblendlichtblenden (32, 52) in Vorrück- bzw. Zurückziehrichtungen bewegen,
wobei, wenn sich die Abblendlichtblenden (32, 52) in zurückgezogenen Positionen befinden, die erste Lampeneinheit (20) und die zweite Lampeneinheit (40) konfiguriert sind, um das erste Fernlichtverteilungsmuster (PH1) bzw. das zweite Fernlichtverteilungsmuster (PH2) zu bilden, und
wobei die Steuerungseinheit (60) konfiguriert ist, um einen Detektionsbereich der Fahrzeugdetektionseinheit (160, 164, 166) in ein Nahbereichsgebiet, ein Mittelbereichsgebiet und ein Fernbereichsgebiet zu teilen, und
wenn sich das vorausfahrende Fahrzeug (200) in dem Nahbereichsgebiet befindet, ein Lichtverteilungsmuster durch Kombinieren des individuellen Abblendlichtverteilungsmusters (PL1, PL2) der ersten Lampeneinheit (20) und der zweiten Lampeneinheit (40) gebildet wird,
wenn sich das vorausfahrende Fahrzeug (200) in dem Mittelbereichsgebiet befindet, ein Lichtverteilungsmuster durch Kombinieren des individuellen Abblendlichtverteilungsmusters (PL1) der ersten Lampeneinheit (20) mit dem zweiten Fernlichtverteilungsmuster (PH2) der zweiten Lampeneinheit (40) gebildet wird, und
wenn sich das vorausfahrende Fahrzeug (200) in dem Fernbereichsgebiet befindet, ein Lichtverteilungsmuster durch Kombinieren des ersten Fernlichtverteilungsmusters (PH1) der ersten Lampeneinheit (20) mit dem individuellen Abblendlichtverteilungsmuster (PL2) oder dem zweiten Fernlichtverteilungsmuster (PH2) der zweiten Lampeneinheit (40) gebildet wird.

3. Vorrichtung nach Anspruch 2, wobei, wenn das erste Fernlichtverteilungsmuster (PH1) gebildet wird, die Steuerungseinheit (60) außerdem konfiguriert ist, um das zweite Fernlichtverteilungsmuster (PH2) zu bilden.

4. Vorrichtung nach Anspruch 2 oder 3, wobei die erste Blende (30) und die zweite Blende (50) in der Lage sind, in Bezug auf eine optische Achse der Lichtquelle vorzurücken und sich zurückzuziehen,
wobei die Fahrzeugscheinwerfervorrichtung (1) ferner Antriebsteile (34, 54) beinhaltet, welche die erste Blende (30) und die zweite Blende (50) in Vorrück- bzw. Zurückziehrichtungen bewegen,
wobei, wenn die Fahrzeugdetektionseinheit das vorausfahrende Fahrzeug (200) nicht detektiert, die Steuerungseinheit (60) konfiguriert ist, um ein Lichtverteilungsmuster in einer solchen Weise auszubilden, dass ein Lichtverteilungsmuster der ersten Lampeneinheit (20), das mit der Abblendlichtblende (32) und der ersten Blende (20) in einer zurückgezogenen Position angeordnet ausgebildet wird, mit einem Lichtverteilungsmuster der zweiten Lampeneinheit (40), das mit der Abblendlichtblende (52) und der zweiten Blende (50) in einer zurückgezogenen Position angeordnet ausgebildet wird, kombiniert wird.

5. Vorrichtung nach einem der Ansprüche 1 bis 4, wobei die Steuerungseinheit (60) konfiguriert ist, um die Bildung des ersten Fernlichtverteilungsmusters (PH1) und des zweiten Fernlichtverteilungsmusters (PH2) in Ansprechen auf einen Winkel zu steuern, der zwischen einer geraden Linie, welche ein Fahrzeug eines Fahrers und das vorausfahrende Fahrzeug (200) verbindet, und einer optischen Achse jeder Lampeneinheit (20, 40) gebildet wird.

## Revendications

1. Dispositif de phares automobiles (1) comprenant :
une première unité de lampe (20) capable de former une première courbe de distribution de feu de route (PH1) qui a une région éclairée (IA1) et une région non-éclairée (UA1) côte-à-côte horizontalement dans des zones au-dessus de lignes de coupe (CL1, CL2, CL3) d'une courbe de distribution de feu de croisement ;
une seconde unité de lampe (40) capable de former une seconde courbe de distribution de feu de route (PH2) qui a une région éclairée (IA2) et une région non-éclairée (UA2) côte-à-côte horizontalement dans des zones au-dessus de lignes de coupe (CL1, CL2, CL3) d'une courbe de distribution de feu de croisement, dans lequel une frontière entre la région éclairée (IA2) et la région non éclairée (UA2) est disloquée horizontalement par rapport à une frontière entre la région éclairée (IA1) et la région non éclairée (UA1) dans la première courbe de distribution de feu de route (PH1) ; et
une unité de commande (60) destinée à commander la formation de la première courbe de distribution de feu de route (PH1) et de la seconde courbe de distribution de feu de route (PH2) sur la base d'informations de position sur un véhicule à l'avant (200) obtenues par une unité de détection de véhicule (160, 164, 166) et
dans lequel la première courbe de distribution de feu de route (PH1) présente une région non éclairée (UA1) dans une partie médiane de zones au-dessus de lignes de coupe (CL1, CL2, CL3) de la courbe de distribution de feu de croisement et une région éclairée (IA1) de chaque côté de la région non éclairée (UA1), et
dans lequel la seconde courbe de distribution de feu de route (PH2) présente une région non éclairée (UA2), qui a une largeur différente de la région non éclairée (UA1) de la première courbe de distribution de feu de route (PH1), dans une partie médiane de zones au-dessus des lignes de coupe (CL1, CL2, CL3) de la courbe de distribution de feu de croisement et une région éclairée (IA2) de chaque côté de la région non éclairée (UA2),
**caractérisé en ce que**
la première unité de lampe (20) est prévue avec une source lumineuse (22a) et une première nuance (30) qui présente une partie en saillie (30c), dans une partie médiane, qui dépasse verticalement par rapport à une direction de largeur de véhicule et qui est configurée pour former la première courbe de distribution de feu de route (PH1) en protégeant partiellement la lumière dirigée par la source lumineuse (22a),
dans lequel la seconde unité de lampe (40) est prévue avec une source lumineuse et une seconde nuance (50) qui présente une partie en saillie (50c), dans une partie médiane, qui dépasse verticalement par rapport à la direction de largeur de véhicule et qui est configurée pour former la seconde courbe de distribution de feu de route (PH2) en protégeant partiellement la lumière dirigée par la source lumineuse, la largeur de la partie en saillie (50c) de la seconde nuance (50) étant supérieure à la largeur de la partie en saillie (30c) de la première nuance (30), et
dans lequel l'unité de commande (60) est configurée pour former la seconde courbe de distribution de feu de route (PH2) dans laquelle le véhicule à l'avant (200) est relativement proche, et
pour former la première courbe de distribution de feu de route (PH1) lorsque le véhicule à l'avant (200) est relativement loin.

2. Dispositif selon la revendication 1, dans lequel la première unité de lampe (20) et la seconde unité de lampe (40), capables d'avancer et de reculer par rapport à un axe optique de la source lumineuse, comprennent des nuances de feu de croisement (32, 52) capables de former des courbes de distribution de feu de croisement (PL1, PL2) individuelles, respectivement, dans une position avancée et des parties d'entraînement (34, 54) qui déplacent les nuances de feu de croisement (32, 52) dans des directions d'avancée et de recul, respectivement,
dans lequel lorsque les nuances de feu de croisement (32, 52) sont dans des postions reculées, la première unité de lampe (20) et la seconde unité de lampe (40) sont configurées pour former la première courbe de distribution de feu de route (PH1) et la seconde courbe de distribution de feu de route (PH2), respectivement, et
dans lequel l'unité de commande (60) est configurée pour diviser une portée de détection de l'unité de détection de véhicule (160, 164, 166) en une zone de portée courte, une zone de portée moyenne et une zone de longue portée, et
lorsque le véhicule à l'avant (200) est dans la zone de portée courte, une courbe de distribution de lumière est formée en combinant la courbe de distribution de feu de croisement (PL1, PL2) individuelle de la première unité de lampe (20) et de la seconde unité de lampe (40),
lorsque le véhicule à l'avant (200) est dans la zone de portée moyenne, une courbe de distribution de lumière est formée en combinant la courbe de distribution de feu de croisement (PL1) individuelle de la première unité de lampe (20) avec la seconde courbe de distribution de feu de route (PH2) de la seconde unité de lampe (40), et
lorsque le véhicule à l'avant (200) est dans la zone de longue portée, une courbe de distribution de lumière est formée en combinant la première courbe de distribution de feu de route (PH1) de la première unité de lampe (20) avec la courbe de distribution de feu de croisement (PL2) individuelle ou la seconde courbe de distribution de feu de route (PH2) de la seconde unité lampe (40).

3. Dispositif selon la revendication 2, dans lequel, en formant la première courbe de distribution de feu de route (PH1), l'unité de commande (60) est en outre configurée pour former la seconde courbe de distribution de feu de route (PH2).

4. Dispositif selon la revendication 2 ou 3, dans lequel la première nuance (30) et la seconde nuance (50) sont capables d'avancer et de reculer par rapport à un axe optique de la source lumineuse,
dans lequel le dispositif de phares automobiles (1) comprend en outre des parties d'entraînement qui déplacent la première nuance (30) et la seconde nuance (50) dans des directions d'avancée et de recul, respectivement,
dans lequel lorsque l'unité de détection de véhicule ne détecte pas le véhicule à l'avant (200), l'unité de commande (60) est configurée pour former une courbe de distribution de lumière de telle sorte qu'une courbe de distribution de lumière de la première unité de lampe (20) formée avec la nuance de feu de croisement (32) et la première nuance (30) disposée dans une position reculée est combinée à une courbe de distribution de lumière de la seconde unité de lampe (40) formée avec la nuance de feu de croisement (52) et la seconde nuance (50) disposée dans une position reculée.

5. Dispositif selon une quelconque des revendications 1 à 4, dans lequel l'unité de commande (60) est configurée pour commander la formation de la première courbe de distribution de feu de route (PH1) et de la seconde courbe de distribution de feu de route (PH2) en réponse à une angle formé entre une ligne droite reliant le véhicule d'un chauffeur et le véhicule à l'avant (200) et un axe optique de chaque unité de lampe (20, 40).
